# EUROPEAN PATENT APPLICATION

(11) **EP 1 313 304 A2**
(43) Date of publication of application: **21.05.2003**
(21) Application number: 02025387.8
(22) Date of filing: 14.11.2002
(51) Int. Cl.: H04N 1/10

(54) **Image reading apparatus**

(30) Priority: 16.11.2001 JP 2001351109; 11.01.2002 JP 2002005068
(71) Applicant: Nisca Corporation, Minamikoma-gun, Yamanashi-ken, 400-0593 (JP)
(72) Inventor: Takei, Akira, Nakakoma-gun, Yamanashi-ken, 400-0400 (JP)
(74) Representative: Maisch, Thomas, Dr. rer. nat.

(57) **Abstract**

An image reading apparatus whose placement area is small and which can obtain an excellent image is provided. An image reading apparatus 1 is provided with a contact glass 300 which is disposed vertically, a conveying belt 505 which conveys a leading edge of a photograph rotatably disposed along the contact glass 300 to a reading reference position T, and a first suction portion 531 which makes a first suction duct 532 a negative pressure by a firs suction fan 503 to suck the photograph form a plurality of suction holes formed in the conveying belt 505. An image is read from a photograph which is sucked to the conveying belt 505 at a reading position and is held so as to be spaced from the contact glass 300 by a predetermined distance while moving a carriage 301 upward along the contact glass 300. Since the contact glass 300 is disposed generally vertically, a placement area for the apparatus is made small and a distance between a photograph and the contact glass 300 is set to be large that Newton's rings do not occur.

## Description

### FIELD OF THE INVENTION

The present invention relates to an image reading apparatus which reads an image recording on an original by moving a reading unit, and in particular to an image reading apparatus which is provided with a conveying unit for conveying an original to a reading position while sucking the original.

### DESCRIPTION OF THE RELATED ART

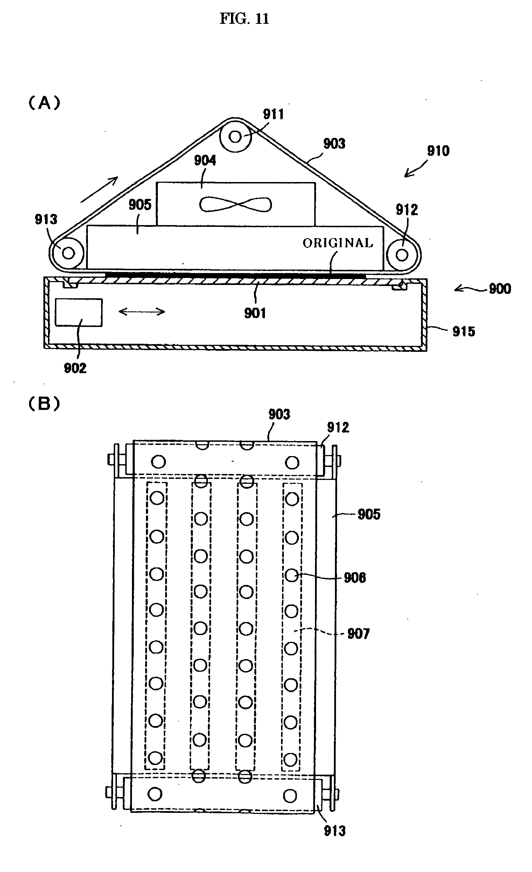

Conventionally, an image reading apparatus which is provided with an original conveying section conveying an original while sucking the original and which reads an image recorded on an original has been known. As shown in Fig. 11A, an image reading apparatus of this kind is provided with an image reading section 900 which has a contact glass 901 fixed generally vertically so as to cover an upper opening of a box-like casing 915 and a reading unit 902 which is positioned inside the casing 915 and which reads an image recorded on an original while moving along the contact glass 902, and an original conveying section 910 which is disposed above the contact glass 901 and conveys the original to a predetermined reading position while sucking the original. As shown in Figs. 11A and 11B, the original conveying section 910 is provided with an endless conveying belt 903 entrained about rollers 911, 912 and 913 which are each formed with a plurality of suction holes 906, a suction duct 905 which is formed on inside (upper side) of the endless conveying belt 903 with rectangular suction openings 907 along a direction of formation of the suction holes 906 for sucking the original on the endless conveying belt 903, and a suction fan 904 which is disposed on a side opposed to the contact glass 901 via the suction duct 905 and which sucks air inside the suction duct 905.

In this image reading apparatus, while an original is being sucked on to the suction holes 906 formed in the conveying belt 903 via the suction openings 907 by sucking air inside the suction duct 905 according to actuation of the suction fan 904, the endless conveying belt 903 is rotated in a direction of an arrow in Fig. 11A by rotating the rollers 911, 912 and 913 by a driving unit (not shown) to convey the original up to a reading position, and an image recorded on the original is read while moving the reading unit 902 in a state that the original is pressed to the contact glass 901.

However, in the above image reading apparatus, there are the following problems. First, there is a problem that, when the original is a glossy original such as a photograph, Newton's rings occur due to interference between light reflected from a surface of an original and light reflected via the contact glass, which is caused by a thin air layer formed between the original and the contact glass, so that an excellent image can not be obtained. Secondly, since the contact glass is fixed to the contact glass generally horizontally with a placement face of the apparatus, the contact glass requires a proper area or size larger than an original area, for reading an original placed on the contact glass, and the casing to which the contact glass is fixed requires a size larger than the area of the contact glass for allowing movement of the reading unit. Therefore, there is another problem that the placement area for the entire apparatus becomes large, and a space saving of the placement area required in recent years can not be achieved.

### SUMMARY OF THE INVENTION

In view of the circumstances, a first object of the present invention is to provide an image reading apparatus which can prevent Newton's rings from occurring to obtain an excellent image. A second object of the invention is to provide an image reading apparatus which can prevent Newton's rings from occurring to obtain an excellent image and which has a small placement area for this apparatus.

In order to achieve the above first object, according to the present invention, there is provided an image reading apparatus comprising: a contact glass, a conveying belt which is disposed along the contact glass and conveys an original to a predetermined reading position; a suction unit which sucks the original to the conveying belt; and a reading unit which moves along the contact glass to read an image on the original, wherein the conveying belt is disposed so as to form a predetermined distance gap between an image face on the original sucked on the conveying belt and a surface of the contact glass, and the reading unit performs reading of the image on the original put in a state that the original is sucked on the conveying belt during actuation of the suction unit.

The image reading apparatus of the present invention is provided with the conveying belt which is disposed along the contact glass and conveys an original to a predetermined reading position, and the suction unit which sucks the original to the conveying belt. The conveying belt is disposed so as to form a predetermined distance gap between an image face on the original sucked to the conveying belt and the surface of the contact glass. This predetermined distance is set to a distance larger than the distance in which light reflected from an original face sucked to the conveying belt and light reflected from the surface of the contact glass interfere with each other. Reading of the image on the original in a state that the original sucked to the conveying belt is performed so that Newton's rings can be prevented from being generated and an excellent image can be obtained.

Further, the image reading apparatus may be provided with a control section which controls drivings of the suction unit, the conveying belt and the reading unit. When such a constitution is employed that the control section, during a period from a start of actuation of the suction unit to a stop of actuation thereof, drives the conveying belt rotate so as to convey the original to the reading position, drives the reading unit move so as to perform reading of the original after a stop of rotation of the conveying belt, and drives the conveying belt rotate so as to discharge the original after completion of reading of the image, conveying of the original to the reading position, reading of the original and discharging of the original can be performed during actuation of the suction unit, so that it is possible to prevent Newton's rings from being generated during the reading time and it is possible to prevent conveyance inferiority of the original due to contacting with the contact glass during conveyance of the original.

Further, when such a constitution is employed that the contact glass is disposed generally vertically and an image of the original is read while moving the reading unit along the contact glass upward or downward, a placement area for the image reading apparatus can be reduced. Since the original is sucked to the endless conveying belt at the reading position and it is spaced from the contact glass by a predetermined distance, Newton's rings can be prevented from being generated and an excellent image can be obtained. Accordingly, the above second object can be achieved. Also, when such a constitution is employed that the reading unit is moved upward to read an image, influence to the image due to vibrations generated according to movement of the reading unit can be reduced as compared with a case that the reading unit is moved downward to read an image.

Further, when such a constitution is employed that a reference position for a reference when an original begins to be read by the reading unit is provided at a lower portion of the contact glass, and a stopping member which stops the original at the reference position, even when an original has fallen during conveyance of the original, the original can securely be stopped at the reading position.

Furthermore, when the image reading apparatus is provided with a first paper feeding opening which is positioned at an upper position of the contact glass and through which an original is inserted; and a conveying path which guides an original inserted from the first paper feeding opening to the reference position along the contact glass, and the conveying path is constituted by first and second conveying paths, the first conveying path being formed by a guide member disposed above the conveying belt and the contact glass, and the second conveying path being formed by the conveying belt and the contact glass, and a second paper feeding path for inserting an original into the conveying path is formed between the conveying belt and the guide member, and originals inserted from the first paper feeding opening and the second paper feeding opening are conveyed to the reference position by the conveying belt, the original inserted from the first paper feeding opening is conveyed to the reading position via the first and second paper feeding paths according to rotation of the conveying belt. Since the second paper feeding opening is formed between the guide member and the conveying belt, an original inserted from the second paper feeding opening is conveyed to the reading position according to rotation of the conveying belt without interposition of the first conveying path. Therefore, a conveyance distance of the original inserted from the second paper feeding opening to the reading position (reference position) becomes short so that a conveyance time of the original can be shortened.

Besides, when the image reading apparatus is further provided with a paper feeding unit which feeds an original from the second paper feeding opening to the conveying path, a processing efficiency is improved when many originals are conveyed and processed, so that the conveying time can further be shortened.

Moreover, the image reading apparatus is further provided with a first paper feeding tray on which an original inserted from the first paper feeding opening is placed, a second paper feeding tray on which an original inserted from the second paper feeding opening is placed, and a paper discharging tray for receiving an original which has been read, where the paper discharging tray is disposed below the conveying belt and the second paper feeding tray is disposed between the first paper feeding tray and the conveying belt, so that the height of the second paper feeding tray which is frequently used is prevented from being set to be high unnecessarily and operability can be improved.

### BRIEF DESCRIPTION OF THE DRAWINGS

Fig. 1 is a side sectional view showing an entire constitution of an image reading apparatus of an embodiment to which the present invention is applicable;
Fig. 2 is a side sectional view illustratively showing a drive system of the image reading apparatus of the embodiment;
Fig. 3 is an appearance perspective view showing a mounting state of a contact glass of an image reading unit;
Fig. 4 is an appearance perspective view showing an ascending and descending structure of a carriage;
Fig. 5 is a side sectional view showing details of a first suction portion and a second suction portion;
Fig. 6 is a front view of the first suction portion and the second suction viewed from line 6-6 section in Fig. 5;
Fig. 7 is a sectional view of the first suction section viewed from line 7-7 section in Fig. 6;
Fig. 8 is a flowchart showing an image reading routine executed by a CPU of a control section;
Fig. 9 is a flowchart showing details of an automatic paper feeding mode processing subroutine of the image reading routine;
Fig. 10 is a flowchart showing details of a panorama mode processing subroutine of the image reading routine; and
Figs. 11A and 11B show explanatory views, Fig. 11A being a sectional view and Fig. 11B being a bottom view of a reading portion.

### DETAILED DESCRIPTION OF THE PREFERRED EMBODIMENTS

An embodiment where the present invention is applied to an image reading apparatus for reading an image of a photograph will be explained below with reference to the drawings. Incidentally, this image reading apparatus is installed in a photo processing shop or the like, and it is provided for such a service for reading an image on a printed photograph brought in the shop by a customer or an image on a photograph printed in the shop, processing and editing the image, and recording it in such a recording medium as a CD-R or the like.

### (Constitution)

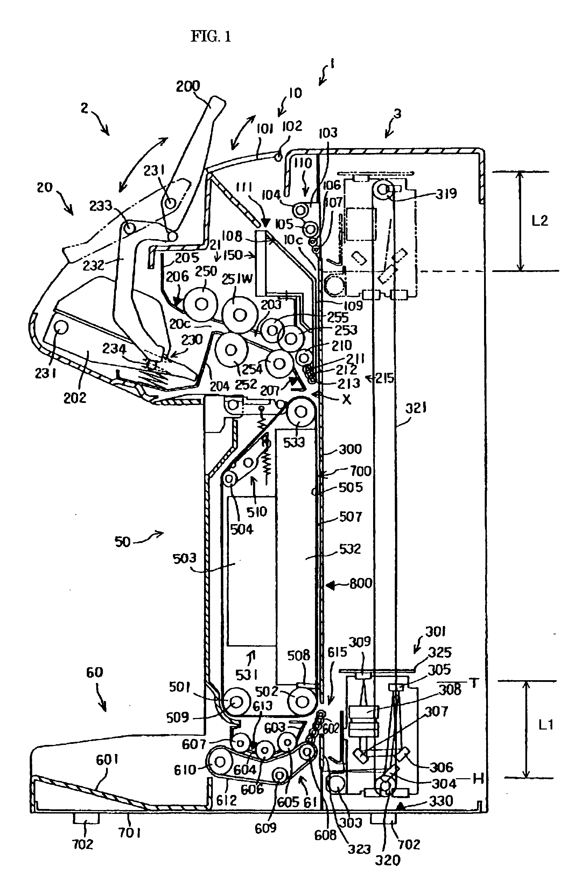

As shown in Fig. 1, an image reading apparatus 1 of this embodiment is provided with an image reading unit 3 which reads images on photographs which are originals and a conveying unit 2 which conveys photographs to a predetermined reading position 800 where reading is performed by the image reading unit 3 one by one.

### <Image Reading Unit>

The image reading unit 3 is provided with a contact glass 300 comprising a transparent glass disposed generally vertically, a white reference plate 323 for shading correction disposed below the contact glass 300, and a carriage 301 serving as a reading unit and reading an image on a photograph while moving along the contact glass 300 by a distance corresponding to the length of the photograph.

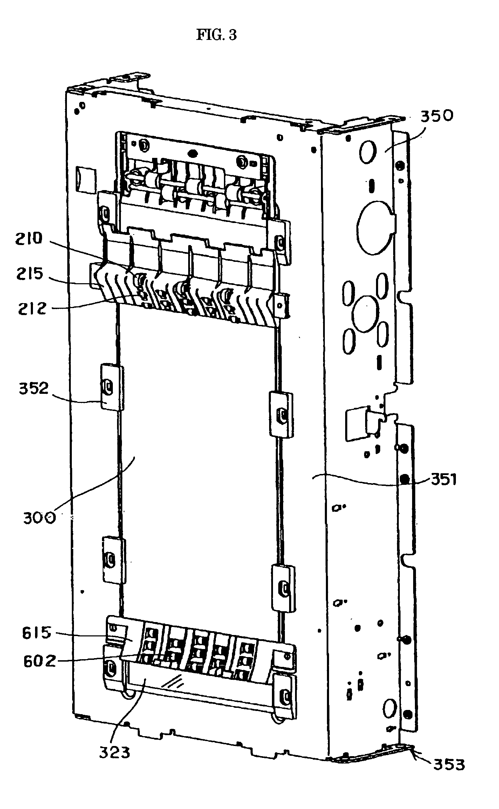

As shown in Fig. 3, the contact glass 300 is mounted to a frame 350. The frame 350 has a mounting face 351 formed with a rectangular opening with a size slightly smaller than that of the contact glass 300 and it is formed in a generally U-shaped sectional configuration. The contact glass 300 is arranged to the opening of the mounting face 351, and end faces thereof are sandwiched between plate-shaped mounting members 352 which totals 6, i.e., 3 for each of left and right sides of the mounting face 351. The contact glass 300 is fixed to the frame 350 by screwing from the mounting members 352 side. Rectangular supporting faces 353, extending in a direction perpendicular to the mounting face 351, are formed at a lower end portion of the frame 350. The supporting faces 353 is fixed to a lower frame 701 (refer to Fig. 1) constituting a bottom face of the image reading apparatus 1. For this reason, the contact glass 300 is supported (arranged) generally perpendicularly to an install face for the image reading apparatus 1. The white reference plate 323 is screwed to the lowermost end portion of the opening of the mounting face 351 like the contact glass 300. Incidentally, four resin-made legs 702 coming in contact with a placement face are fixed to the lower frame 701 on a placement face side of the lower frame at predetermined intervals .

The contact glass 300 and the white reference plate 323 constitute flat faces generally equal to each other in a vertical direction through a rotating body supporting member 615 with a generally R-shaped section which constitutes a portion of a discharging section 60 described later and supports a plurality of rollers 602 (rotary bodies) (also refer to Fig. 1). The plurality of rollers 602 are arranged continuously in a staggered manner such that outer peripheries of the rollers which are adjacent to one another in an original conveying (discharging) direction overlap one another.

As shown in Fig. 1, the carriage 301 is constituted as an integral unit provided with a light source 303 such as a Xenon lamp irradiating light on a photograph, a plurality of mirrors 304, 305, 306 and 307 for changing an optical path of reflected light from a photograph, a lens unit 308 for focusing reflected light from the mirror 307, a color image sensor 309 comprising three CCDs performing photoelectric transfer on the reflected light focused for respective three colors of RGB, and a sensor board 325 attached with the image sensor 309.

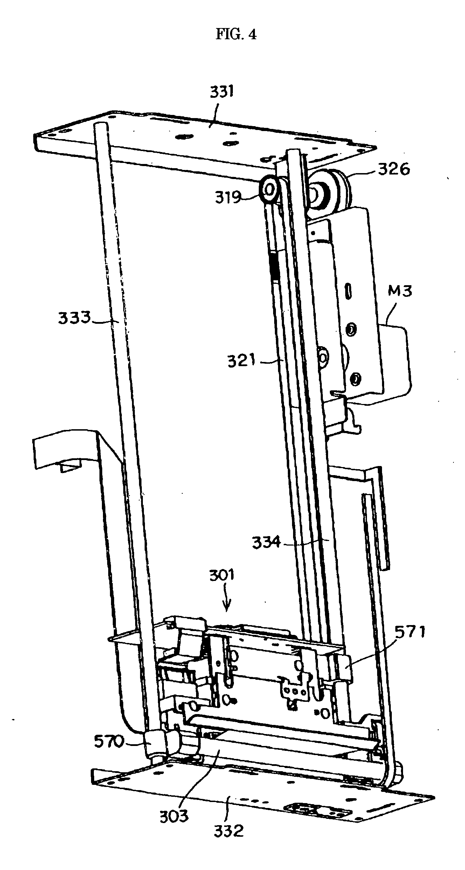

Also, the image reading unit 3 is provided with a driving pulley 319 moving the carriage 301 disposed on an upper side in upward and downward directions (vertically) along the contact glass 300 and an idle pulley 320 disposed on a lower side, and a timing belt 321 is entrained about the driving pulley 319 and the idle pulley 320. As shown in Fig. 4, another pulley 326 having a diameter larger than that of the driving pulley 319 is fitted to a pulley shaft for the driving pulley 319 on a side opposed to the driving pulley 319. A rotation driving force from a carriage motor M3 which is reversibly rotatable and serves as a driving source for the carriage 301 is transmitted to the pulley 326 via a timing belt (not shown).

The carriage 301 is supported at its both sides by cylindrical supporting member 570 and 571 which are slidable against a pair of rod-like guide shafts 333 and 334 respectively. Both ends of the guide shafts 333 and 334 are fixed to plate-like upper frame 331 and a plate-like lower frame 332 arranged so as to be separated from each other in a vertical direction. The supporting members 570 and 571 are made of high polymer resin and they are formed so as to have inner diameters slightly larger than outer diameters (diameters) of the guide shafts 333 and 334. Therefore, the carriage 301 supported by the supporting members 570 and 571 is constituted so as to be slidable in upward and downward directions according to guidance of the guide shafts 333 and 334.

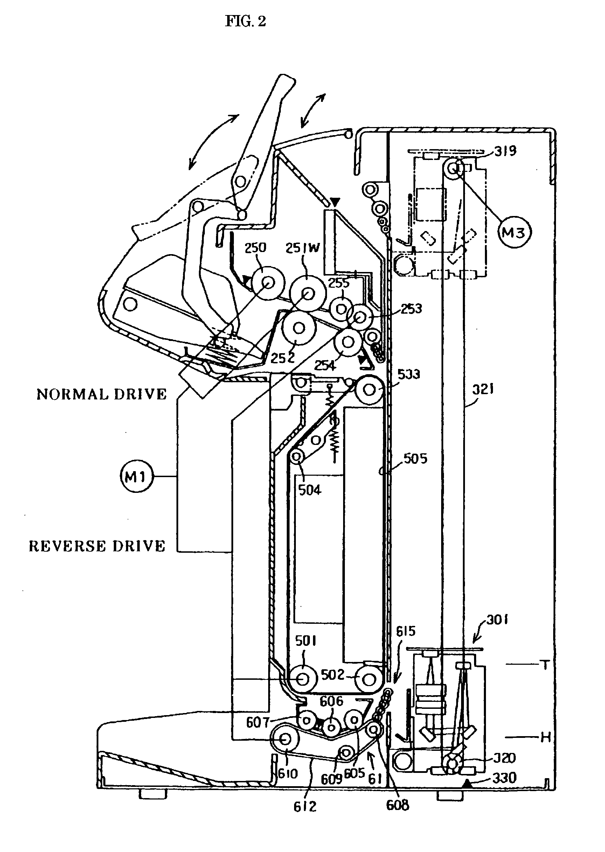

As shown in Fig. 2, the driving pulley 319 and the timing belt 321 are rotated in a clockwise direction according to a normal rotating drive of the carriage motor M3 so that the carriage 301 is moved upward, and the driving pulley 319 and the timing belt 321 are rotated in a counterclockwise direction according to a reverse rotating drive of the carriage motor M3 so that the carriage 301 is moved downward. As shown in Fig. 1, a home position sensor 330 comprising a transmission type sensor for detecting a home position H of the carriage 301 is disposed on the lower frame 701. The carriage 301 can move upward and downward along the contact glass 300 from the home position H (restricted by the upper frame 331) to a position in the vicinity of an upper end of the contact glass 300 (a dotted line position shown in Fig. 2). Also, a reference position T which serves as a stopping reference of a photograph conveyed by the conveying unit 2 is set at a lower portion of the contact glass 300, and the photograph is caused to abut on a stopping unit (described later) provided at the reference position T to be stopped at a reading position 800. Incidentally, this reference position T is also set as an original reading start position of the carriage 301. Further, the vicinity below the white reference plate 323 is set at the home position H of the carriage 301.

### <Conveying Unit>

As shown in Fig. 1, the conveying unit 2 is provided with a manual paper feeding section 10 having a manual paper feeding opening 10C which is disposed at an upper portion of the contact glass 300 and which serves as a first paper feeding opening, a conveying path 700 which is constituted by a first conveying path 109 and a second conveying path 507 as described later and guides a photograph (its leading edge) along the contact glass 300 from the manual paper feeding opening 10C to a reading position 800 (the reference position T), an original conveying section 50 which conveys a photograph along the conveying path 700, an automatic paper feeding section 20 which feeds a photograph having a predetermined length or less between the manual paper feeding section 10 and the original conveying section 50, and a discharging section 60 which discharges a photograph whose image has been read by the carriage 301.

Incidentally, the photograph having the predetermined length or less (hereinafter, referred to as "S-size photograph") includes, for example, an E-size (88 mm x 117 mm) photograph, an L-size (88 mm x 127 mm) photograph, a 4R size (4 inches x 6 inches = 101.6 mm x 152.4 mm) photograph, a high vision size (88 mm x 156 mm) photograph, an instant photograph small (86 mm x 54 mm), an instant photograph large (86 mm x 108 mm), and a photograph having a length longer than the predetermined length (hereinafter, referred to as "a panorama photograph") includes, for example, a panorama photograph (88 mm x 254 mm).

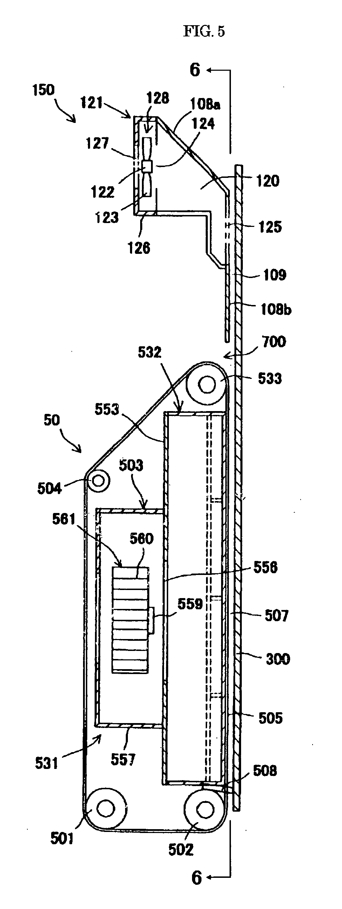

The manual paper feeding section 10 is constituted by a cover 101 which can be opened/closed by rotating the cover about a rotation shaft 102 manually, the manual paper feeding opening 10C through which a panorama photograph is inserted, a guide portion 110 which guides a panorama photograph to the manual paper feeding opening 10C, a frame 108 (also refer to Fig. 5) comprising a manual paper feeding tray 108a on which a panorama photograph is placed (for supporting a panorama photograph) and a guide frame 108b disposed so as to be separated from an upper surface of the contact glass 300 by a predetermined distance positioned through a bent portion bent at an obtuse angle, a second suction portion 150 which serves as a suction unit and which is formed integrally with the frame 108 so as to suck a panorama photograph, and an empty sensor 111 which is disposed in the vicinity of an upper end of the frame 108 so as to detect presence/absence of a panorama photograph.

The cover 101 can be opened/closed manually, as described above, and it has a function for preventing foreign matters such as dusts from being mixed in the image reading apparatus 1 by closing the cover 101 when any panorama photograph is not placed on the manual paper feeding tray 108a, namely, when the manual paper feeding tray is not used, and a function for preventing external light from entering in the image reading apparatus 1 by closing the cover 101 at a time of reading an image on a photograph.

The guide portion 110 is constituted by mounting idle rollers 104, 105, 106 and 107 to a guide member 103 with a generally triangular sectional configuration. These idle rollers 104, 105, 106 and 107 are disposed such that, when a panorama photograph is inserted from the manual paper feeding opening 10C manually or when a panorama photograph is conveyed, the idle rollers rotate in contact with an image face of the photograph, thereby reducing contact resistance between the panorama photograph and the guide member 103 and preventing the image face on the photograph from being injured.

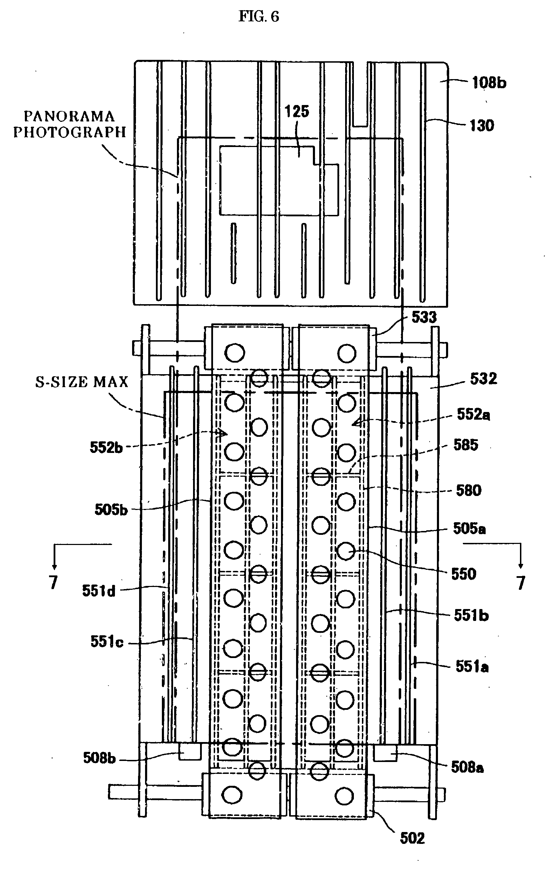

The frame 108 has the manual paper feeding tray 108a and the guide frame 108b formed integrally of black resin with each other. As described above, the manual paper feeding tray 108a positioned above the curved portion is curved to the conveying path 700, so that foreign matters are prevented from being directly mixed in the conveying path 700 from the manual paper feeding opening 10C. The guide frame 108b positioned below the curved portion forms a first conveying path 109 serving as an upper side conveying path of the conveying path 700 in association with a surface of the contact glass 300, and it functions as a supporting face for supporting a panorama photograph. As shown in Fig. 6, a plurality of ribs 130 extending in a conveying direction of a panorama photograph are formed on a face opposed to the contact glass 300 of the guide frame 108b, and a panorama photograph is brought in line contact with these ribs 130 so that contact resistance is reduced at a conveying time. Also, a rectangular suction opening 125 is formed generally at a central portion of the guide frame 108b, and a generally central portion of a panorama photograph is sucked by the second suction portion 150.

As shown in Fig. 5, the second suction portion 150 is constituted by a bag-like second suction duct 120 formed of resin integral with the frame 108 and a second suction fan 121 screwed on a side of the second suction duct 120 opposed to an air suction opening 125. The second suction fan 121 has a fan 128 constituted by mounting a plurality of blades around a boss 122 inside a box-like casing 126. A generally circular vent hole 124 is formed in the casing 126 on a side of the second suction duct 120, and a discharge opening 127 is formed on a side opposed to the second suction duct 120. Since air sucked from the air suction opening 125 is discharged from the discharging opening 127 due to actuation of the second suction fan 121 (rotation of the fan 128), a panorama photograph is sucked via the air suction opening 125 and it is supported by the ribs 130 on the guide frame 108b. A suction force of the second suction portion 150 is set to be weaker than a suction force of a first suction portion 531 described later.

In this embodiment, while the thickness of a photograph is about 0.3 mm, a distance from a surface of each rib 130 to a surface of the contact glass 300 is set to be about 1mm. Accordingly, a surface (an image face) of a panorama photograph sucked by the second suction portion 150 and supported by the ribs 130 is spaced from the surface of the contact glass 300 by a predetermined distance (about 0.7 mm).

The original conveying section 50 is constituted by an endless conveying belt 505 which is entrained about rollers 501, 502, 533 and 504, the first suction portion 531 which sucks a photograph surrounded by the conveying belt 505 on to the conveying belt 505, and a stopping member 508 which is positioned at a lower portion of the contact glass 300 and driven so as to freely advance to/retract from the conveying path 700 (the second conveying path 507), thereby stopping the photograph at the reference position T (the reading position 800).

The conveying belt 505 forms the second conveying path 507 in association with a surface of the contact glass 300, which is continuous to the above-described first conveying path and serves as a lower portion side conveying path of the conveying path 700. As shown in Fig. 6, the conveying belt 505 is constituted by two black conveying belts 505a and 505b extending in parallel with each other in the original (photograph) conveying direction, and a plurality of suction holes 550 for suction are formed in each of the endless belts 505a and 505b so as to extend in two line manner along the original conveying direction. Incidentally, in order to impart tension on the conveying belt 505, the roller 504 is mounted so as to be rotatable about a fulcrum positioned at one side of a lever 510 having a fulcrum at its central portion and a predetermined biasing force is applied to the other side of the lever 510 by a spring (refer to Fig. 1). Further, the conveying belt 505 covers a portion of the contact glass 300, and the length of the conveying belt 505 in the original conveying direction is set to be shorter than the length of an original with the maximum size to be read. Furthermore, the conveying belt 505 is disposed downstream (below) and adjacent to the guide frame 108b.

As shown in Fig. 5, the first suction portion 531 is constituted by a first suction duct 532 and a first suction fan 503. The first suction duct 532 has a box-like shape formed of black resin. The first suction duct 532 is disposed such that its one side on the contact glass 300 comes in contact with a portion of the conveying belt 505 positioned between the rollers 533 and 502 through a beam described later, and an attaching plate 553 where a generally circular vent hole 556 is formed at its central portion is screwed to the other side of the first suction duct 532 which is opened. The first suction fan 503 is fixed to the attaching plate 553 by screws (not shown). The first suction fan 503 has in a box-like casing 557 a fan 561 formed by mounting many blades 560 about a boss 559. A discharging opening (not shown) is formed in the casing 557 on a back side of the drawing of Fig. 5.

As shown in Fig. 6, two lengthwise suction openings 552a and 552b extending along the original conveying direction are formed at a generally central portion in the first suction duct 532 on the contact glass 300 side, and the endless belts 505a and 505b are entrained about the rollers 533 and 502 so as to close these suction openings 552a and 552b. As described above, suction holes 550 extending in two lines along the suction openings 552a and 552b are formed in each of the endless belts 505a and 505b. Therefore, a photograph is sucked on the conveying belt 505 via the suction holes 550 of the endless belts 505a and 505b and the suction openings 552a and 552b of the first suction duct 503 according to actuation of the first suction fan 503 (rotation of the fan 561), and air sucked from the suction holes 550 is discharged from the discharging opening (not shown) of the first suction fan 503.

The first suction duct 532 has four ribs 551a, 551b, 551c and 551c extending along the original conveying direction on both outer sides of the suction openings 552a and 552b. These ribs support both outer sides of a photograph which are not supported by the endless belts 505a and 505b disposed at the central portion, and they reduce contact resistance between the photograph at a time of conveying and the first suction duct 532 surface by bringing the photograph in line contact with the first suction duct 532, thereby preventing the photograph from being skewed.

Also, the first suction duct 532 has three vertical beams 580 extending in the original conveying direction at both sides of each of the suction openings 552a and 552b and at a central portion therebetween, and three horizontal beams 585 extending at an angle of about 90° to the vertical beams 580. The vertical beams 580 and the horizontal beams 585 project from a surface of the first suction duct 532 to the side of the contact glass 300 to support each of the endless belts 505a and 505b. For this reason, a contact area between each of the endless belts 505a and 505b and the first suction duct 503 surface is reduced and a contact resistance is reduced. Two vertical beams 580 of the six vertical beams which are disposed at a center of each of the suction openings 552a and 552b and six horizontal beams 585 prevent each of the endless belts 505a and 505b from deforming due to suction and therefore prevent a photograph from deforming.

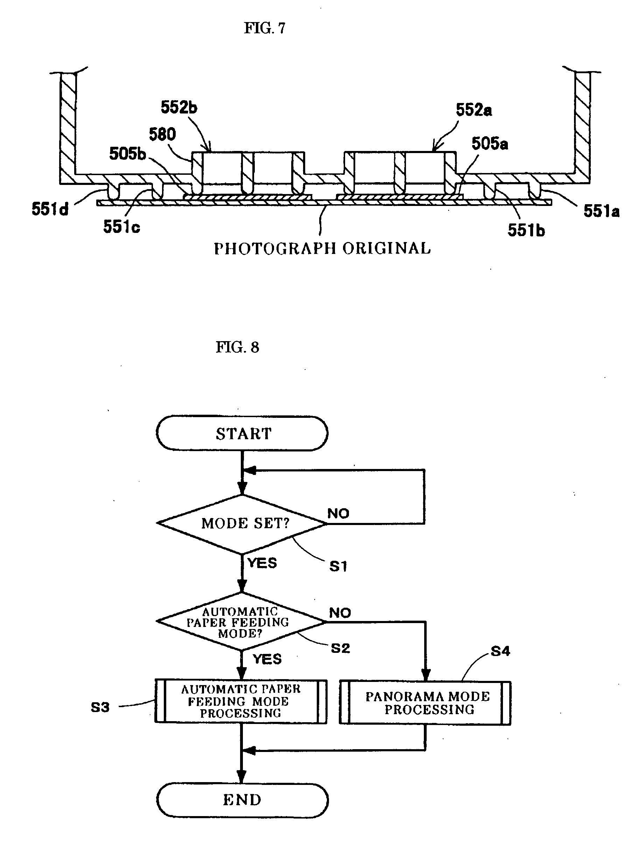

As shown in Fig. 7, the height (length) of each of the ribs 551a to 551d from the first suction duct 532 and the length the height of the vertical beam 580 (the horizontal beam 585) from the first suction duct 532 plus the thickness of each of the endless belts 505a and 505b are set to be equal to each other. Thereby, flatness of a photograph sucked on the endless belts 505a and 505b is maintained. Also, a distance from the surface of the conveying belt 505 to the surface of the contact glass 300 and a distance from the surface of each of the ribs 551a to 551d to the surface of the contact glass 300 are set to about 1mm like the above-described manual paper feeding section 10. Therefore, a surface (image face) of a photograph sucked on the suction belt 505 by the first suction portion 531 and supported by the ribs 551a to 551d is spaced from the surface of the contact glass 300 by a predetermined distance (about 0.7mm). Also, a panorama photograph sucked and supported by both the first suction portion 531 and the second suction portion 150 is sucked and retained in a state where the photograph is spaced from the contact glass 300 by a predetermined distance and has a flatness.

As shown in Fig. 6, the length of the conveying belt 505 positioned between the rollers 533 and 502 is set to be longer than the length of the S-size photograph in the original conveying direction and be shorter than the length of the panorama photograph in the original conveying direction. That is to say, the first suction duct 532 has such a length that a high vision size photograph of the S-size photographs which has the maximum (MAX) length in the original conveying direction is sucked over its original conveying direction in a state that a leading edge of the high vision size photograph has abutted on the stopping member 508 (stoppers 508a and 508b) and a portion of a panorama photograph on its rear end side is sucked.

The first suction duct 503, and the endless belts 505a and 505b are colored to black which is the same color as that of the above-described frame 108 (have the same reflectance as the frame 108) in order to prevent influence of a background generated at a time of reading a photograph. That is, by making the background colors of these members uniformly black, an influence of an edge portion of the conveying belt or shadows of the suction holes is prevented, and such a drawback that a phenomenon that a character (s) written on a back surface of a photograph grows transparent because the photograph is a thin original (having a relatively high transmission), a so-called "a see-through state" of a photograph occurs so that the character is read together with a photograph image is prevented. Also, by making the frame 108 black, a drawback that an edge portion of the suction opening 125, a lower end side edge portion of the guide frame 108b, an upper end side edge portion of the first suction duct 532 and the like are seen through a photograph is prevented.

The stopping member 508 is constituted by two stoppers 508a and 508b. These stoppers 508a and 508b are attached on a lower side of the conveying belt 508 so as to be able to advance to/retract from the conveying path 700 (the second conveying path 507) in parallel with each other, and they abut on a leading edge of a photograph being conveyed to stop the photograph at the reading position 800 on the basis of the reference position T (refer to Fig. 1). Further, skewing of a photograph is more securely corrected by providing the stoppers 508a and 508b outside the conveying belt 50a and causing them to abut on an outer side of the photograph.

As shown in Fig. 1, the automatic paper feeding section 20 is provided with a paper feeding tray cover 200 which is opened/closed manually, a paper feeding tray 202 on which a plurality of S-size photographs are stacked, a feeding-out opening 20C through which an S-size photograph on the paper feeding tray 202 is inserted, guides 204 and 205 which guide an S-size photograph inserted from the feeding-out opening 20C downstream, a paper feeding portion 21 which serves as a paper feeding unit and which feeds an S-size photograph along a paper feeding path 203 formed with the guides 204 and 205, and an empty sensor 206 which detects presence/absence of an S-size photograph on the paper feeding tray 202.

The paper feeding tray 202 has a spring 230 which pushes the paper feeding tray 202 from the lower side thereof and a rotating shaft 231, and it is put in a state where it has always been pushed up about the rotating shaft 231 by the spring 230.

The paper feeding tray cover 200 has a lever 232 which is rotated about the rotating shaft 231 serving as a fulcrum and rotated in engagement with the paper feeding tray cover 200. The lever 232 is constituted such that it is rotated about the rotating shaft 233 to be engageable with an engagement pin 234 provided integrally with the paper feeding tray 202. When the paper feeding tray cover 200 is opened by an operator, the lever 232 is pushed down and the engagement pin 234 is also pushed downward, so that the paper feeding tray 202 is lowered and S-size photographs can be stacked on the tray 202. On the other hand, when the paper feeding tray cover 200 is closed, the lever 232 is ascended and is not engaged with the engagement pin 234, so that the paper feeding tray 202 is put in a free state. At this time, the paper feeding tray 202 is put in a state where it is pushed up by the spring 230, and an uppermost face of the S-size photographs stacked on the paper feeding tray 202 is brought in contact with a pick-up roller 250 described later.

The paper feeding path 203 is formed by guides 204 and 205 which are disposed so as to be spaced by a predetermined distance and which guide S-size photographs stacked on the paper feeding tray 202 from a feeding-out opening 20C to an automatic paper feeding opening X which is a second paper feeding opening and which is formed between the conveying belt 505 and the guide frame 108b. Accordingly, the frame 108b (cover unit) which covers a portion of the contact glass 300 is disposed upstream of the conveying belt 505 in the original conveying direction, and an automatic paper feeding opening X functions as a conveying path (second paper feeding opening) for guiding (inserting) an original into a second conveying path 507 formed between the conveying belt 505 for conveying the original and the contact glass 300. The guide 205 disposed above the guide 204 is connected to a roller supporting member 215 with a generally R-shaped section which rotatably supports idle rollers 210, 211, 212 and 213 deflecting the orientation of a S-size photograph gradually to feed the photograph in the contact glass 300 direction in the vicinity of the automatic paper feeding opening X (the second paper feeding opening) (refer to Fig. 3, too) . The roller supporting member 215 is spaced from the contact glass 300 by a predetermined distance and screwed to an attaching face 351 of the frame 350 like the rotating body supporting member 615. These idle rollers 210, 211, 212 and 213 are disposed to the roller supporting member 215 in a staggered manner such that adjacent outer peripheries of the rollers overlap each other, so that a surface of an S-size photograph is reduced from being injured or being soiled. On the other hand, a timing sensor 207 which detects a leading edge and a trailing edge of an S-size photograph according to ON/OFF thereof is disposed at a position opposed to the roller supporting member 215 of the guide 204.

The paper feeding section 21 is constituted by a pick-up roller 250 which feeds out S-size photographs on the paper feeding tray 202, a paper feeding roller 251W which feeds the fed-out S-size photographs downstream, a separating roller 252 which separates the S-size photographs fed out by the paper feeding roller 251W to respective ones, a pair of registration rollers 253 and 254 which convey the S-size photograph downward while correcting an inclination (skewing) of the photograph, and a guide roller 255 which reduces a contact resistance between the S-size photograph and the guide 205. These rollers are disposed along the guides 204 and 205. The S-size photographs stacked on the paper feeding tray 202 are inserted in the conveying path 700 (the second conveying path 507) via the paper feeding path 203 and the automatic paper feeding opening X by a driving force of a conveying motor M1 described later.

The discharging section 60 is provided with a paper discharging tray 601 on which photographs whose images are read by the carriage 301 are stacked, the rotating body supporting member 615 which is disposed below the contact glass 300, as described above, a paper discharging portion 61 which is disposed downstream of the rotating body supporting member 615 to convey a photograph along a paper discharging path 604 guiding a photograph towards the paper discharging tray 601, and a paper discharging sensor 613 which detects a trailing edge of a photograph.

The paper discharging portion 61 has a curved guide 603 forming one side of the paper discharging path 604, idle rollers 605, 606 and 607 which are disposed along the guide 603, and a paper discharging belt 612 which is entrained about pulleys 608, 609 and 610 and is curved through abutment of the idle rollers 605, 606 and 607, and which forms the other side of the paper discharging path 604. The paper discharging sensor 613 is disposed towards the paper discharging path 604 between the idle rollers 606 and 607.

As shown in Fig. 2, the conveying unit 2 has the reversible conveying motor M1 which serves as a driving source and a stopper motor M2 (not shown). The pick-up roller 250 and the paper feeding roller 251W are driven via a plurality of gears, and pulleys and a belt (they are not shown) according to a normal rotational drive of the conveying motor M1, and the registration roller 253, the conveying belt 505 and the paper discharging belt 612 are driven according to a reverse drive thereof. Specifically speaking, the pick-up roller 250 and the paper feeding roller 251W are rotated in a counterclockwise direction in Fig. 2 according to a normal rotation of the conveying motor M1, but the registration roller 253 and the paper discharging belt 612 (the driving pulley) are rotated in a counterclockwise direction according to a reverse rotation and the conveying belt 505 (the driving roller 501) is rotated in a clockwise direction according to the reverse rotation. The stopper motor M2 (not shown) is connected to the steppers 508a and 508b so as to advance/retract them to/from the conveying path 700.

Also, the image reading apparatus 1 is provided, at a position opposed to the contact glass 300 via the timing belt 321 inside the image reading unit 3, with a power supply portion (not shown) which converts commercially available ac current to dc current which can drive/operate various mechanical portions and control portions and a control portion (not shown) which performs operation control on the whole image reading apparatus 1, and it is also provided on an upper portion of the image reading unit 3 with an operation portion (not shown) on which a mode button for allowing an operator to select paper feeding modes described later and a start button for allowing an operator to start conveying/reading operations of the image reading apparatus 1 are disposed.

The control portion has a main board for controlling the image sensor 309 and a CPU block for performing control processing on this main board and the image reading apparatus 1. The main board is constituted by a known circuit including a converter for A/D-converting image data read by the image sensor 309, a gate array, a page memory and the like, and it is connected to a sensor board 325 via a flexible board. The CPU block is constituted by a CPU serving as a central processing unit, a ROM in which control operations of the image reading apparatus 1 are stored, a RAM which serves as a work area of the CPU, and an internal bus connecting these members. An external bus is connected to the CPU block. Connected to the external bus are an operation control unit for controlling the operation portion, a sensor control unit for controlling signals from various sensors, a driver control unit for controlling motor drivers which feed driving pulses to respective motors, a fan control portion for performing ON/OFF control on the first suction fan 503 and the second suction fan 121, and an external interface for outputting image data read by the carriage 301 to an upper device such as a personal computer or the like. Also, the operation control unit is connected to the operation portion, the sensor control unit is connected to the sensor 111, 206, 207 and 613, the driver control unit is connected to drivers for driving the motors M1 to M3, and the fan control portion is connected to the first suction fan 503 and the second suction fan 121, respectively.

### (Operation)

Next, an operation of the image reading apparatus 1 of the present embodiment will be explained mainly on the basis of the CPU of he control portion with reference to flowcharts. When the image reading apparatus 1 is turned ON, an image reading routine for reading an image of a photograph is executed.

As shown in Fig. 8, in this image reading routine, in step S1, first, the apparatus is on standby until an operator pushes the mode button on the operation portion. An operator can select either one of an automatic paper feeding mode for automatically conveying one or a plurality of S-size photographs to the image reading unit 3 one by one to read an images on the photographs and a panorama mode for conveying panorama photographs to the image reading unit 3 one by one manually to read images on the panorama photographs.

In the next step S2, determination is made about whether or not the selected paper feeding mode is the automatic paper feeding mode. When the determination is affirmative, an automatic paper feeding mode processing subroutine is performed.

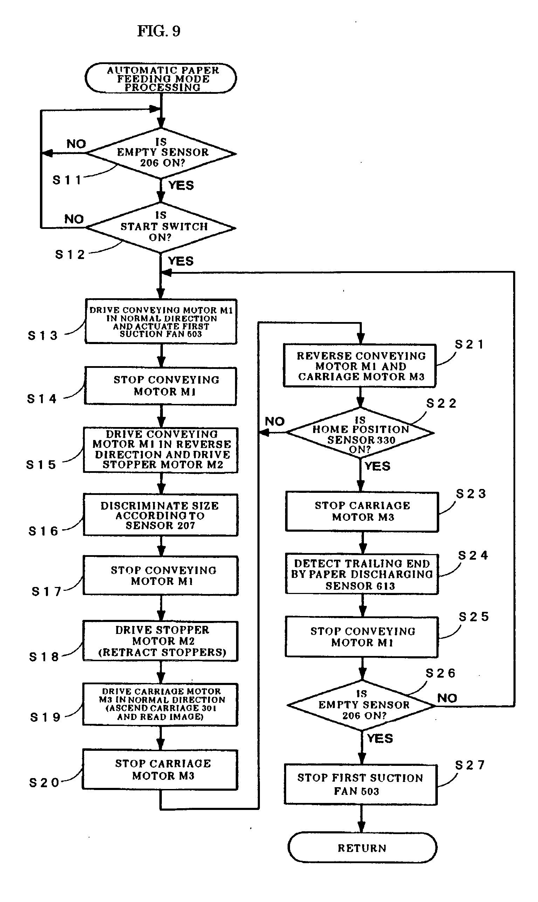

As shown in Fig. 9, in the automatic paper-feeding processing subroutine, the control is on standby in step S11 until the empty sensor 206 detects an S-size photograph. When the determination in the step is affirmative, namely when an operator puts an S-size photograph on the paper feeding tray 202 with its image face or reading face directed upwardly on the basis of the center reference and closes the paper feeding tray cover 200 so that the lever 232 and the engagement pin 234 are disengaged fromeach other, the paper feeding tray 202 is ascended while rotating about the rotating shaft 231, the photograph or image face of the uppermost photograph is pushed on to the pick-up roller 250, and the empty sensor 206 detects the S-size photograph, determination is made in the step S12 about whether or not an operator has pushed the start button on the operation portion. When the determination is negative, the control returns back to step S11, but when the determination is affirmative, the conveying motor M1 is driven in a normal rotating direction, and the first suction fan 503 is actuated.

Thereby, the pick-up roller 250 is rotated in a counterclockwise direction and the uppermost S-size photograph of S-size photographs is fed out from the feeding-out opening 20C to the paper feeding path 203. The S-size photographs fed out are separated to respective ones by the paper feeding roller 251W rotated in a counterclockwise direction and the separating roller 252 and they are individually conveyed downstream along the paper feeding path 203. Also, air suction in the first suction duct 502 is performed according to activation of the first suction fan 503.

In the next step S14, determination is made about whether or not the conveying motor M1 is rotationally driven in a normal direction by a predetermined number of pulses. When the determination is negative, the conveyance performed by the conveying motor M1 is continued, but when the determination is affirmative, the driving of the conveying motor M1 is stopped. Thereby, a leading edge of the S-size photograph is caused to abut on a nip point of the pair of registration rollers 253 and 254 which have stopped to form a registration loop so that skewing of the S-size photograph in the conveying direction is removed. Incidentally, the predetermined number of pulses is set to a number sufficient to form this registration loop.

In the next step S15, the conveying motor M1 is rotationally driven in a reverse direction to rotate the conveying belt 505 in a clockwise direction and the stopper motor M2 (not shown) is driven to advance the stoppers 508a and 508b to the second conveying path 507. The S-size photograph is fed from the automatic paper feeding opening X to the conveying path 700 (the second conveying path 507) according to the registration roller 253 (the registration roller 254 is rotated in accordance with the registration roller 253) and its leading edge is caused to abut on the contact glass 300, so that the conveying direction of the S-size photograph is corrected, thereby directing the S-size photograph towards the conveying belt 505 side. While the photograph which has reached the conveying belt 505 is being sucked by activation of the first suction fan 503, it is conveyed towards the reference position T according to rotation of the conveying belt.

In the next step S16, the size of the S-size photograph is discriminated on the basis of the leading edge and the trailing edge of the photograph detected by the timing sensor 207, and the feeding amount of the S-size photograph up to the reference position T (the number of pulses) is determined referring to a Table stored in the ROM in advance. In step S18, determination is made about whether or not conveyance of the photograph is performed by the feeding amount determined in step S16 from the detection of the trailing edge of the S-size photograph made by the timing sensor 207. When the determination is negative, the conveyance is continued, but when the determination is affirmative, the conveying motor M1 is stopped. Thereby, the rotation of the conveying belt 505 is stopped and the leading edge of the S-size photograph is caused to abut on the stoppers 508a and 508b so that the S-size photograph is held at the reading position 800 based upon the reference position T. At this time, the central portion of the S-size photograph is sucked to the stopped conveying belt 505 over the original conveying direction and the S-size photograph is put in the state that it is spaced from the contact glass 300 by the predetermined distance, as described above.

In the next step S18, the stopper motor M2 is driven in a reverse direction to retract the stoppers 508a and 508b from the second conveying path 507, and the carriage motor M3 is driven in a normal direction in step S19. Thereby, the timing belt 321 is rotated in the clockwise direction shown so that the carriage 301 is ascended from the home position H. The carriage 301 reads the white reference plate 323 while being ascended and subsequently it reads an image while it is moving in an ascending manner over the distance corresponding to the length of the S-size photograph from the reference position T.

In step S20, determination is made about whether or not the carriage 301 is ascended by the distance corresponding to the length of the S-size photograph discriminated in step S16. When the determination is negative, the processing in step S19 is continued, but when the determination is affirmative, that is, when reading of the image is completed, the driving of the carriage motor M3 in the normal direction is stopped. Image data read from the photograph is stored in the page memory in the main board.

In the next step S21, the carriage motor M3 and the conveying motor M1 are driven in a reverse direction. The belt 321 rotates in a counterclockwise direction, and the carriage 301 starts descending towards the home position H according to driving of the carriage motor M3 in the reverse direction. In the next step S22, determination is made about whether or not the carriage 301 is detected at the home position. When the determination is negative, the control returns back to step S21 where the reverse driving of the carriage motor M3 and the conveying motor M1 is continued. When the determination is affirmative, the carriage motor M3 is stopped in the next step S23. The reverse driving of the conveying motor M1 is continued, and the conveying belt 505 and the paper discharging belt 612 are respectively rotated in a clockwise direction and in a counterclockwise direction, so that the S-size photograph is being conveyed towards the paper discharging tray 601. Also, in step S23, determination is made about whether or not the leading edge of the S-size photograph is detected by the paper discharging sensor 613. When the determination is negative, the reverse driving of the conveying motor M1 is continued, but when the determination is affirmative, the rotation speed of the conveying motor M1 is reduced.

Next, in the next step S24, determination is made about whether or not the trailing edge of the S-size photograph is detected. When the determination is negative, the reduced rotation speed of the conveying motor M1 is maintained, but when the determination is affirmative, the conveying motor M1 is stopped after driven in a reverse direction by a predetermined feeding amount in step S25. Thereby, the S-size photograph is put in a state where it is placed on the paper discharging tray 601. Next, in step 526, determination is made about whether or not the empty sensor 206 has detected the next S-size photograph. When the determination is affirmative, the control returns back to step S13 where processing of the next S-size photograph is performed. When the determination is negative, the first suction fan 503 is stopped in step S27, and the automatic paper feeding mode processing subroutine and the image reading routine are terminated.

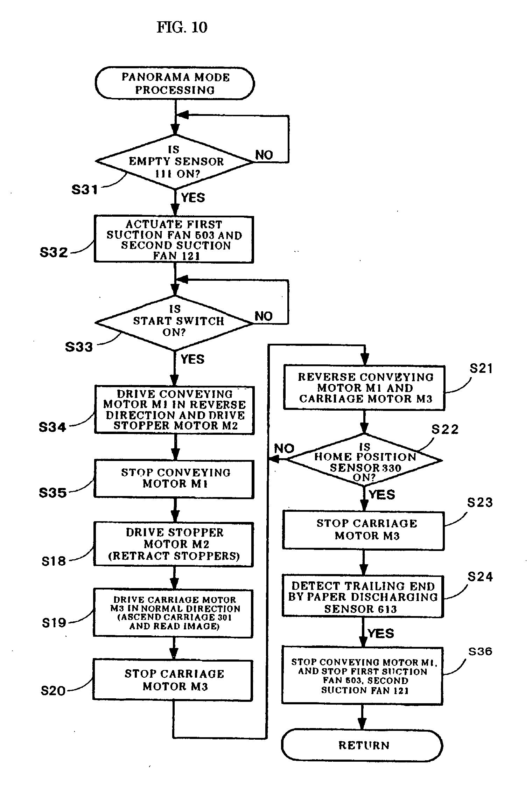

On the other hand, when a negative determination is made in step S3 shown in Fig. 8, the panorama mode processing subroutine shown in Fig. 10 is conducted in step S4. In the panorama mode, an operator opens the cover 101, and inserts a panorama photograph manually until a leading edge of the panorama photograph reaches a position between the conveying belt 505 and the contact glass 300 (for example, up to the center of the conveying belt 505) via the manual paper feeding opening 10C and the conveying path 700 (the first conveying path 109). Thereby, the panorama photograph is put in a state where it is placed on the manual paper feeding tray 108a. Incidentally, in Fig. 10, the same steps as those in Fig. 9 are denoted by the same reference numerals, and explanation thereof will be omitted and only different steps and different portions will be explained below.

In this panorama mode processing subroutine, first, the control is on standby until a panorama photograph is detected by the empty sensor 111 in step S31. When a panorama photograph is detected, the first suction fan 503 and the second suction fan 121 are actuated in the step S32. Thereby, the first suction fan 532 and the second suction fan 120 respectively start air suction, and a leading end side of the panorama photograph is sucked to the conveying belt 505 while a trailing end side thereof is sucked to the suction opening 125 formed in the guide frame 108b.

Next, the control is on standby until the start button is pushed down by an operator in step S33. When the start button is pushed down, the conveying motor M1 is driven in a reverse direction and the stopper motor M2 is driven after a predetermined time elapses in the next step S34. Thereby, the conveying belt 505 is rotated in a clockwise direction so that the stoppers 508a and 508b are advanced to the conveying path 507 (the second conveying path 507). A trailing end portion of the panorama photograph is sucked according to activation of the second suction fan 121 to be spaced from the contact glass 300 by the predetermined distance, and the panorama photograph is conveyed downstream according to rotation of the conveying belt 505 while a leading end portion of the panorama photograph is being sucked to the conveying belt 505.

Next, in step S35, determination is made about whether or not the trailing edge of the panorama photograph is detected by the empty sensor 111. When the determination is negative, the driving of the conveying motor M1 and the stopper motor M2 is continued, but when the determination is affirmative, the conveying motor M1 is stopped after the panorama photograph is conveyed by the predetermined feeding amount (the feeding amount required for the leading edge of the panorama photograph to abut on the stoppers 508a and 508b). At this time, the leading edge of the panorama photograph abuts on the stoppers 508a and 508b to stop at the reading position 800 based upon the reference position T, where the leading edge side of the photograph is sucked to the conveying belt 505 by the first suction fan 503 and the trailing edge side thereof is sucked to the suction opening 125 of the guide frame 108b by the second suction fan 121 so that the panorama photograph is put in its supported state. Accordingly, the panorama photograph is held to the conveying belt 505 and the suction opening 125 in a state where it is spaced from the contact glass by the above-described predetermined distance.

In the next step S18 to step S24, as described above, processing similar to corresponding steps in the automatic paper feeding mode processing subroutine shown in Fig. 9 is performed. In these steps, differences from the corresponding step in the automatic paper feeding mode processing subroutine include a point that ascending and descending distances of the carriage become longer and a point that a processing time of the panorama photograph up to discharging thereof is made longer, because the length of the panorama photograph is longer than that of the S-size photograph.

Next, in step S36, the conveying motor M1, the first suction fan 503 and the second suction fan 121 are stopped after a predetermined time elapse, and the panorama mode processing subroutine and the image reading routine are terminated.

Incidentally, the image reading apparatus 1 performs communication with an upper device connected to an external interface, and it feeds image data stored in the page memory according to requirement from the upper device.

### (Effect etc.)

Next, operation of the image reading apparatus of the embodiment and the like will be explained.

In the image reading apparatus 1 of the present embodiment, since the contact glass 300 is disposed generally vertically and an image on a photograph is read by moving the carriage 301 along the contact glass 300 in an ascending manner, an placement area for the image reading apparatus 1 can be reduced. In particular, since a distance L1 from the home position H to the reference position T, including a distance required for stabilization of the speed of the carriage 301 in order to conduct reading from the reference position T stably and a distance required for reading the white reference plate 323, is required and a distance L2 corresponding to the width of the carriage 301 is required in order to move the carriage 301 up to an upper end of the contact glass 300 (refer to Fig. 1), the placement area is made large in the conventional image reading apparatus where the contact glass 300 is disposed horizontally on a placement face and the carriage 301 is moved laterally, because the area of the contact glass 300 is not only increased but also the casing is made large by a size corresponding to the distances L1 and L2. Since this image reading apparatus 1 is constituted such that the contact glass 300 is disposed generally vertically and the carriage 301 is moved upward and downward, the placement area can be reduced by the size corresponding to the distances L1 and L2. Further, since such a structure is employed that only the first suction portion 531 is caused to surround the conveying belt 505 for conveying a photograph and the second suction portion 150 is not caused to surround the conveying belt 505, small-sizing of the conveying unit 2 and therefore small-sizing of the image reading apparatus 1 can be achieved.

Also, there are differences (play or allowance) between the outer diameters of the guide shafts 333 and 334 and the inner diameters of the supporting members 570 and 571, and a downward force of the self-weight of the carriage 301 always acts on the carriage 301. For this reason, vibration occurs due to the fact that inclination corresponding to the above-described differences (play or allowance) between the outer diameters of the guide shafts 333 and 224 and the inner diameters of the supporting members 570 and 571 is repeatedly and alternately generated at left and right sides, and the vibration is magnified at a descending time of the carriage 301 as compared with an ascending time thereof. In the image reading apparatus 1, when reading of a photograph is conducted while the carriage 301 sucking and holding the photograph is being moved, though it is sufficiently possible to conduct reading while the carriage 301 is being descended, the reading is conducted while the carriage 301 is being ascended (step S19), so that influence to image quality due to generation of vibration at a time of movement of the carriage 301 can further be reduced.

Further, in the image reading apparatus 1, a panorama photograph inserted from the manual paper feeding opening 10C is conveyed to the reading position 800 (the reference position where the leading edge of the panorama photograph abuts on the stoppers 508a and 508b) while it is being sucked by the first suction portion 531 and the second suction portion 150 to be stopped, and it is sucked to the conveying belt 505 by the first suction portion 531 and sucked to the second suction portion 150 at the reading position 800, so that the photograph is held in a state where it is spaced from the contact glass 300 by the predetermined distance (steps S34 and S35). On the other hand, an S-size photograph inserted from the feeding-out opening 20C is conveyed to the reading position 800 (the reference position where the leading edge of the panorama photograph abuts on the stoppers 508a and 508b) while it is being sucked by the first suction portion 531 to be stopped, and the photograph is sucked to the conveying belt 505 by the first suction portion 531, so that the photograph is held in a state where it is spaced from the contact glass 300 by the predetermined distance (steps S15 to S17). The distance between the contact glass 300 and the panorama glass or the S-size photograph is about 0.7mm, and an air layer formed therebetween is sufficient larger than an interference distance generating Newton's rings. According to the image reading apparatus 1, when a photograph is read by the carriage 301 (step S19), a sufficient distance which does not generate Newton's rings to the contact glass 300 can be formed, so that an excellent image can be obtained. Also, in the image reading apparatus 1, since a panorama photograph is conveyed in a state where it is spaced from the contact glass 300 by the predetermined distance while the trailing end portion of the panorama photograph is being sucked by the second suction portion 150, conveyance inferiority due to that the trailing end portion of the photograph is suspended and the suspended portion is sucked to the contact glass 300 (conveyance made impossible or a flaw on an image face generated by skewing of the photograph to the conveying direction or dragging of the photograph sucked to the contact glass 300) can be prevented from occurring. Since the photograph is held in a state that it is spaced from the contact glass 300 at a time of image reading, the photograph is prevented from being attached (sucked) to the contact glass 300, and such a drawback that conveyance inferiority at a discharging time such as discharge impossibility occurs or an image face is injured due to friction between the photograph and the contact glass, does not occur. It is also possible to prevent conveyance inferiority of the original due to contacting with the contact glass during conveyance of the original.

Also, in the image reading apparatus 1, an S-size photograph inserted from the feeding-out opening 20C is conveyed to the reference position T by the conveying belt 505 without using the first conveying path 109 utilized in case of a panorama photograph inserted from the manual paper feeding opening 10C, a conveyance distance for the S-size photograph is shortened so that a conveying time can be reduced. Further, in the image reading apparatus 1, since the automatic paper feeding section 20 which feeds an S-size photograph from the feeding-out opening 20C to the conveying path 700(the second conveying path 507) via the automatic paper feeding opening X is provided, processing efficiency can be improved in case that many S-size photographs is conveyed/read, and the conveying time can further be shortened. In addition, it is unnecessary to dispose the paper feeding tray 202 for S-size photographs with a high frequency in use at a high position so as to match with the manual paper feeding tray 108a for panorama photographs with a low frequency in use, operability can be improved.

Furthermore, in the image reading apparatus 1, since the reference position T which serves as the original stopping reference is disposed at the lower portion of the contact glass 300 and the stopping member 508 for stopping a leading edge of a photograph at this reference position T is provided so as to advance to/retract from the conveying path 700, even when a photograph has fallen down at a time of photograph conveyance, the photograph can securely be stopped at the reference position T where an image thereon can be read. In addition, since the stopping member 508 is constituted by two stoppers 508a and 508b and the stoppers 508a and 508b are disposed in a spaced manner to each other so as to be able to advance/retract in parallel with each other, they abut on the leading edge of the photograph at two points so that skewing of the photograph in the conveying direction can be corrected.

Also, in the image reading apparatus 1, a panorama photograph is conveyed to the reference position T by the conveying belt 505 while a trailing end portion thereof is being sucked by the second suction portion 150, but a suction force of the second suction portion 150 is set to be weaker than a suction force of the first suction portion 505, so that a load to the conveying belt 505 due to the suction force of the second suction portion 150 can be reduced.

Moreover, in the image reading apparatus 1, since a plurality of rollers are disposed in a staggered manner to the roller supporting member 215 and the rotating body supporting member 615 which are disposed in the vicinity of the conveying path 700 so as to be curved in a generally R-shaped configuration such that outer peripheries of rollers adjacent to one another continuously in the conveying/discharging directions of a photograph overlap one another, an photograph face can be reduced from being injured or being soiled. Also, in the image reading apparatus 1, since the paper discharging belt 612 is formed on the side of coming in contact with an image face on a photograph in the curved paper discharging path 604, the image face can be reduced from being injured or being soiled and an area of a photograph applied with a conveying force is increased so that a nipping force can be reduced without decreasing the conveying force.

Incidentally, in this embodiment, the example where the original is a photograph has been shown, but the present invention is not limited to the case that the original is the photograph. The present invention is applicable to an image reading apparatus which reads an image recorded on such an original as a postcard, a plain paper of A4 size or the like, and particularly the present invention is effectively applied to an coated original with a high reflectance, a film or the like.

In this embodiment, the example where the thickness of a photograph is about 0.3mm, and the distance from the surface of the rib 130 to the surface of the contact glass 300, the distance from the surface of the conveying belt 505 to the surface of the contact glass 300 and the distance from each of the ribs 551a to 551d to the surface of the contact glass 300 are respectively set to about 1mm has been shown, but these distances can be changed properly according to the thickness of a main original to be read.

Further, in this embodiment, the example where a photograph is sucked by sucking the photograph to the first suction portion 531 and the second suction portion 150 by the first suction fan 503 and the second suction fan 121 to put the interiors of the first suction duct 532 and the second suction duct 120 in negative pressure has been shown, but the present invention is not limited to this example. For example, such a constitution can be employed in this invention that an original is attracted, for example, utilizing electrostatic force.

In this embodiment, the example where the stoppers 508a and 508b are retracted from the conveying path 700 at a time of reading has been shown, but such a constitution can be employed in this invention that the stoppers are retracted after reading an image on a photograph such that the reading is performed in a state where the stoppers are advanced to the conveying path 700. Further, in this embodiment, the example where the stopping member 508 has been divided into the stoppers 508a and 508b and they are disposed below the conveying belt 505 has been shown, but these stoppers 508a and 508b may be constituted in one piece. In this case, the stoppers may be connected so as to bypass the position of the conveying belt 505.

Further, in this embodiment, the example where the panorama photograph is an original to be manually fed has been shown (step S18), but processing efficiency for the panorama photograph can be improved when an automatic feeding system is applied to the panorama photograph like the case of the S-size photograph. In this embodiment, the example where the reference position serving as the reference for original stopping is set to the same position as the reading start position has been shown, but the present invention is not limited to this example. Both the reference position and the reading start position may be different from each other in this invention.

In this embodiment, the example where the second suction portion 150 has been disposed upstream of the first suction portion 503 in the original conveying direction has been shown. However, since it is required only that the second suction portion 150 assists suction of one side of a long panorama photograph at a time of conveyance of the panorama photograph conducted by the conveying belt 505, the second suction portion 150 may be disposed downstream of the first suction portion 503 for conveyance of a panorama photograph.

## Claims

1. An image reading apparatus comprising:
a contact glass;
a conveying belt which is disposed along the contact glass and conveys an original to a predetermined reading position;
a suction unit which sucks the original to the conveying belt; and
a reading unit which moves along the contact glass to read an image on the original,
wherein the conveying belt is disposed so as to form a predetermined distance gap between an image face on the original sucked on the conveying belt and a surface of the contact glass, and the reading unit performs reading of the image on the original put in a state that the original is sucked on the conveying belt during actuation of the suction unit.

2. An image reading apparatus according to claim 1, further comprising a control section which controls drivings of the suction unit, the conveying belt and the reading unit, wherein the control section, during a period from a start of actuation of the suction unit to a stop of actuation thereof, drives the conveying belt rotate so as to convey the original to the reading position, drives the reading unit move so as to perform reading of the image on the original after a stop of rotation of the conveying belt, and drives the conveying belt rotate so as to discharge the original after completion of reading of the image.

3. An image reading apparatus according to claim 1, wherein the conveying belt comprises at least one endless belt formed with a plurality of suction holes, the suction unit comprises a suction fan which sucks air and a suction duct which is formed with at least one suction opening and which has a length in an original conveying direction longer than that of the suction fan, and wherein the suction duct and the suction fan are disposed inside the endless belt, and the original is sucked to the conveying belt via the suction holes and the suction opening according to actuation of the suction fan.

4. An image reading apparatus according to claim 1, wherein a paper feeding tray on which an original to be read is placed and a paper feeding unit which feeds an original to the conveying belt are disposed upstream of the conveying belt in the original conveying direction, and a paper discharging tray which receives an original which has been read is disposed downstream of the conveying belt in the original conveying direction.

5. An image reading apparatus according to claim 4, wherein the paper feeding unit has a feeding-out unit for feeding out an original from the paper feeding tray, and the paper feeding tray has a urging member for urging an original placed on the paper feeding tray towards the feeding-out unit.

6. An image reading apparatus according to claim 1, wherein the conveying belt covers a portion of the contact glass, and the length of the conveying belt in the original conveying direction is set to be shorter than the length of an original with the maximum size to be read.

7. An image reading apparatus according to claim 6, wherein a cover unit which covers a portion of the contact glass is disposed upstream of the conveying belt in the original conveying direction, and a paper feeding opening for inserting an original into a conveying path formed between the conveying belt and the contact glass is formed between the cover unit and the conveying belt.

8. An image reading apparatus according to claim 1, further comprising a stopping member on which an original conveyed by the conveying belt is caused to abut to stop the original at the reading position, wherein the reading unit performs reading of an image while moving in a direction of separating from the stopping member.

9. An image reading apparatus according to claim 1, wherein the contact glass is disposed generally vertically and the reading unit reads an image on the original while moving upward or downward along the contact glass.

10. An image reading apparatus according to claim 9, wherein the reading unit reads an image on the original while moving upward along the contact glass.

11. An image reading apparatus according to claim 10, wherein a reference position for a reference when an original begins to be read by the reading unit is provided at a lower portion of the contact glass, and a stopping member which stops the original at the reference position is further provided.

12. An image reading apparatus according to claim 11, further comprising: a first paper feeding opening which is positioned at an upper position of the contact glass and through which an original is inserted; and a conveying path which guides an original inserted from the first paper feeding opening to the reference position along the contact glass,
wherein the conveying path is constituted by first and second conveying paths, the first conveying path being formed by a guide member disposed above the conveying belt and the contact glass, and the second conveying path being formed by the conveying belt and the contact glass,
and wherein a second paper feeding path for inserting an original into the conveying path is formed between the conveying belt and the guide member, and originals inserted from the first paper feeding opening and the second paper feeding opening are conveyed to the reference position by the conveying belt.

13. An image reading apparatus according to claim 12, further comprising a paper feeding unit which feeds an original from the second paper feeding opening to the conveying path.

14. An image reading apparatus according to claim 12, further comprising a first paper feeding tray on which an original inserted from the first paper feeding opening is placed, a second paper feeding tray on which an original inserted from the second paper feeding opening is placed, and a paper discharging tray which receives an original which has been read, wherein the paper discharging tray is disposed below the conveying belt and the second paper feeding tray is disposed between the first paper feeding tray and the conveying belt.
